# EUROPÄISCHE PATENTANMELDUNG

(11) **EP 1 528 044 A2**
(43) Veröffentlichungstag der Anmeldung: **04.05.2005**
(21) Anmeldenummer: 04021770.5
(22) Anmeldetag: 14.09.2004
(51) Int. Cl.: C03B 11/08, C03B 23/02

(54) **Verfahren zur Herstellung einer genoppten Platte aus einem Glas oder einer Glaskeramik, damit hergestellte Platte und hierzu eingesetztes Werkzeug**

(30) Priorität: 31.10.2003 DE 10351718
(71) Anmelder: Schott AG, 55122 Mainz (DE)
(72) Erfinder: Schillert, Horst, 31073 Grünenplan (DE); Rössler, Dirk, 31073 Grünenplan (DE); Mevers, Detlef, 37632 Holzen (DE)
(74) Vertreter: Fuchs Mehler Weiss & Fritzsche

(57) **Zusammenfassung**

Die Erfindung betrifft ein Verfahren zur Herstellung einer Platte aus einem Glas oder einer Glaskeramik, gekennzeichnet durch folgende Schritte:
- Auflegen der Platte (1) auf einen Träger (2) mit noppenartigen Erhebungen und/oder Vertiefungen (3).
- Gemeinsames Erwärmen der Platte und des Trägers über die Transformationstemperatur hinweg.
- Abkühlen der Platte auf Raumtemperatur.

Weiterhin betrifft die Erfindung eine Glas- oder Glaskeramikplatte, die Noppen (8, 8') aufweist.

Gelehrt wird ferner die Verwendung der obigen Platte in Wärmeerzeugern, insbesondere Backöfen, zur thermischen Entkopplung unterschiedlich warmer Raumbereiche sowie auch zur Keimabtötung, letzteres insbesondere in Klimaanlagen.

## Beschreibung

Die Erfindung betrifft ein Verfahren zur Herstellung einer genoppten Platte aus einem Glas oder einer Glaskeramik, die damit hergestellte genoppte Platte, und das hierzu eingesetzte Formwerkzeug. Die genoppte Platte kann in Backöfen zur thermischen Entkopplung des heißen Innenraumes zum kälteren Außenbereich (Küche) eingesetzt werden, aber auch in Klimaanlagen zur Keimabtötung.

Nach dem allgemeinen Stand der Technik gibt es unterschiedliche Verfahren um Löcher in Glasplatten einzubringen. So ist es möglich, mit konventionellem Bohren unter Einsatz von Diamantbohrern Löcher in eine Glasplatte einzubringen.

Ein weiteres allgemein bekanntes Verfahren ist das Ultraschallschwingläppen, mit dem man nur Löcher in Glasplatten einbringen kann, die eine Größe von maximal 25,4 cm (10 Zoll) aufweisen. Die Lochgröße bei diesem Läppverfahren ist sehr eingeschränkt.

Allgemein bekannt ist ferner die Sandstrahltechnik, mit der sich begrenzt Löcher in Glasplatten einbringen lassen, und ebenfalls das Laserverfahren, mit dem man einzelne Löcher mit kleinem Durchmesser in ein Glas einbringen kann.

Der Erfindung liegt das technische Problem zugrunde ein Verfahren zur Herstellung einer Platte aus einem Glas oder einer Glaskeramik bereitzustellen, mit dem schnell eine große Zahl von Löchern mit beliebiger Kontur bereitgestellt werden können.

Weiterhin besteht das zu lösende Problem in der Bereitstellung einer genoppten Glasplatte und die Schaffung eines hierzu geeigneten Formwerkzeuges.

Erfindungsgemäß wurde erkannt, dass der verfahrensseitige Teil des oben genannten technischen Problems zur Herstellung einer Platte aus einem Glas oder einer Glaskeramik dadurch möglich ist, dass das Verfahren folgende Schritte umfasst:
- Auflegen der Platte auf einen Träger mit noppenartigen Erhebungen und/oder Vertiefungen,
- Gemeinsames Erwärmen der Platte und des Trägers über die Transformationstemperatur hinweg, und
- Abkühlen der Platte auf Raumtemperatur.

Die Herstellung der Platte erfolgt damit dergestalt, dass die Platte auf den flächigen Träger gelegt wird, und es bei einer hinreichend hohen Temperatur von Träger und Platte zu einer plastischen Verformung der Platte kommt. Weist der Träger noppenartige Erhebungen auf, so kommt es durch viskoses Fließen des Glas- oder Glaskeramikmaterials zu einer Ausfüllung des Raumbereiches zwischen den Erhebungen. Alternativ weist der Träger noppenartige Vertiefungen auf, und fließt Glas- oder Glaskeramikmaterial bei hinreichend hohen Temperaturen in diese Vertiefungen hinein. Die Oberfläche des Trägers wird auf diese Weise durch die Platte abgebildet. In diesem Sinne stellt der Träger eine Art Negativ und die Platte eine Art Positiv dar.

Der flächige Träger weist noppenartige Erhebungen oder Vertiefungen auf. Durch den Herstellungsprozess wird an der Stelle der noppenartigen Erhebung oder Vertiefung des Trägers die Platte mit einer Noppe ausgestattet.

Unter einer Noppe im Sinne dieser Erfindung soll eine Materialverdrängung im Wesentlichen senkrecht zur Oberfläche der Platte verstanden werden, die höckerartig ausgebildet ist. Von der einen Seite der Platte betrachtet stellt sich die Materialverdrängung als eine Erhebung mit weitgehend beliebig ausgebildeter Oberfläche dar, und von der anderen Seite der Platte betrachtet als eine Ausnehmung dar.

Der Träger sollte zur Erzielung einer exakten Noppengeometrie bei der Platte aus einem Glas oder einer Glaskeramik selbst keine temperaturbedingte Verformung erfahren, mit anderen Worten ausreichend formstabil sein. Außerdem sollte das Glas nur möglichst wenig am Träger haften, damit die Platte vom Träger abgelöst werden kann. In diesem Sinne hat sich als Trägermaterial ein Chrom-Nickel-Stahl bewährt, und zwar besonders derjenige mit der Materialnummer 1.4122 bei einem Kohlenstoffgehalt zwischen 0,20 und 0,25 Gew. %. Beste Ergebnisse erhält man bei einer zusätzlichen Vergütung des Chrom-Nickel-Stahls auf 800 -1000 N/mm².

Um eine bessere Enthaftung Platte/Träger zu gewährleisten, ist letzteres mit einem Trennmittel versehen. Bei dem o. g. Chrom-Nickel-Stahl wurden gute Ergebnisse mit Bornitrid BN A 01 erzielt.

Für den Prozess ausreichend ist es, wenn die Platte und der Träger derart gemeinsam erwärmt werden, dass sie gemeinsam die Transformationstemperatur überschreiten. Insofern ist es ausreichend, wenn die Platte in noch warmfestem Zustand auf den Träger gelegt wird, um anschließend mit ihm gemeinsam über die Transformationstemperatur hinweg erwärmt zu werden.

Die Geschwindigkeit des Herstellungsverfahrens wird allerdings durch den Umstand begrenzt, dass nicht nur die Platte, sondern auch der Träger erwärmt werden muss. Aus diesem Grund wird die Herstellung beschleunigt, wenn die Platte auf einen vorgeheizten Träger gelegt wird.

Um das Ausfüllen aller Raumbereiche des Trägers zwischen noppenartigen Erhebungen oder das Hineinfließen von Material in noppenartige Vertiefungen zu verbessern, kann nach dem Überschreiten der oberhalb der Transformationstemperatur befindlichen Solltemperatur eine Wartezeit bis zum Kühlen eingehalten werden. Das Glas benötigt nämlich eine gewisse Zeit um in alle Vertiefungen zwischen noppenartigen Erhebungen bzw. in noppenartige Vertiefungen zu gelangen. Das Einhalten einer Wartezeit verbessert insofern die exakte Abbildung des Trägers durch das Glas- oder Glaskeramikmaterial.

Um eine genaue Abformung der Trägeroberfläche durch das Glas bzw. die Glaskeramik zu gewährleisten ist es wichtig, dass das Glas oder die Glaskeramik alle Bereiche des Trägers zwischen noppenartigen Erhebungen vollständig ausfüllt. Um dies zu verbessern kann vorgesehen sein, diese Bereiche des Trägers zwischen noppenartigen Erhebungen mit einem Unterdruck zu beaufschlagen. Der Druck kann hierbei im Bereich von etwa 0,4 bar bis etwa 0,6 bar liegen. Im Falle noppenartiger Vertiefungen wird an die Vertiefung ein Unterdruck angelegt. In diesem Fall wird das Plattenmaterial in die besagten Raumbereiche gezogen.

Das Anlegen eines Unterdrucks kann dadurch erfolgen, dass die besagten Bereiche des Trägers zwischen noppenartigen Erhebungen bzw. die noppenartigen Vertiefungen mit durchgehenden Öffnungen ausgestattet sind, und auf der der Platte abgewandten Seite des Trägers ein Unterdruck angelegt wird. Auf diese Weise wird das Glasoder Glaskeramikmaterial von der Rückseite des Trägers aus durch die durchgehenden Öffnungen hindurch angesaugt. Auf diese Weise erfährt das Material eine Kraft in Richtung der Trägeroberfläche zwischen noppenartigen Erhebungen bzw. in die noppenartigen Vertiefungen hinein, was zu einer besseren Ausfüllung dieser Bereiche mit dem Material führt.

Um die formgenaue Abbildung der Trägeroberfläche mit dem Material zu gewährleisten kann zusätzlich vorgesehen sein, die Platte mit einem Druck zu beaufschlagen. Auf diese Weise wird das Material der Platte in die Bereiche zwischen den noppenartigen Erhebungen bzw. in die Vertiefungen des Trägers gedrückt.

Es kann vorgesehen sein, dass die Noppen der abgekühlten Platte partiell abgeschliffen werden. Auf diese Weise entsteht eine Noppe mit einer durchgehenden Öffnung bzw. einem Loch. Der Abschliff kann mittels Schleifplatten, Diamantschleifscheiben, Schleifbänder, CNC-Schleifmaschinen mit Diamantwerkzeugen, oder mittels eines Lasers erfolgen. Wenn der Schleifprozess parallel zur Plattenoberfläche durchgeführt wird gelingen bei gleichen Noppen Öffnungen mit identischer Randkontur.

Durch das erfindungsgemäße Verfahren entsteht eine Glas- oder Glaskeramikplatte mit Noppen. Die Noppen sind hierbei in ihrer Grundform mit beliebiger Oberfläche ausgestattet, und sind hohl ausgebildet. Es kann jedoch auch eine beidseitig offene Ausbildung der Noppen vorgesehen sein. In diesem Fall weisen die Noppen eine durchgehende Öffnung auf. Die Kontur der Öffnung hängt dann von der geometrischen Form der Noppe einerseits, und von der Art des Abschliffs andererseits ab, mit der ein Teil der Noppe abgetragen wird. Innerhalb einer Platte können unterschiedlich gestaltete Noppen vorgesehen sein, ggf. mit unterschiedlichen Öffnungskonturen.

Die mit Noppen ausstattbaren Platten haben eine Dicke von ca. 0,5 mm bis ca. 60 mm. Gute Ergebnisse wurden erzielt, wenn die noppenartigen Erhöhungen geringfügig höher waren als die Platte dick war, so beispielsweise um 1/10 mm.

Für die durch Abschleifen entstehenden Öffnungen kann ein Durchmesser von ca. 0,5 mm bis ca. 100 mm gewählt werden. Die räumliche Ausgestaltung der Noppe kann in hohem Maße variabel gestaltet werden. In einer Aufsicht auf die Platte kann die Noppe eine runde oder eine polygonale Randkontur aufweisen. Die Noppen können ferner kegelstumpfförmig oder polyedrisch sein. Im Falle kegelstumpfförmiger Noppen hat es sich als zweckmäßig erwiesen, die Mantelfläche der Noppe gegenüber der Noppengrundfläche um einen Winkel von ca. 20° bis ca. 85° gegenüber der Grundfläche des Trägers zu neigen. Für größere Winkel wächst die Oberfläche einer Noppe des Trägers zunehmend, was ein Enthaften des Glas- oder Glaskeramikmaterials zunehmend erschwert.

Aus dem Vorstehenden ergibt sich, dass die Platte in ihrer Grundform nicht eben sein muss. Es ist auch möglich, eine gewölbte Platte vorzusehen, und in diese die Noppen einzubringen.

Für die Herstellung der genoppten Platte ist ein Träger aus einem bei hohen Temperaturen formstabilen Material erforderlich, welches Chrom-Nickel-Stahl sein kann. Um die formgenaue Abbildung der Trägeroberfläche zu gewährleisten weist das flächige Werkzeug zwischen noppenartigen Erhebungen durchgehende Öffnungen auf.

Mit dem erfindungsgemäßen Verfahren kann eine hohe Zahl von Öffnungen auch in großen Platten von beispielsweise 1500 mm x 1500 mm Größe mit beispielsweise 1000 Öffnungen innerhalb kurzer Zeit geschaffen werden. Der Zeitbedarf zur Schaffung der Öffnungen in einer Platte ist nur ca. 50 min.

Die genoppte Platte kann ferner beschichtet werden, beispielsweise mittels eines Sputterverfahrens mit Metalloxidschichten (z. B. solche mit Gold, Chrom oder Titan). Wegen der großen Glasoberfläche eignet sich die Platte dann mit einer geeigneten keimabtötenden Schicht dieses Typs zur Sauberhaltung von Luft in einer Klimaanlage.

Nachfolgend soll die Erfindung anhand eines Ausführungsbeispieles näher erläutert werden.

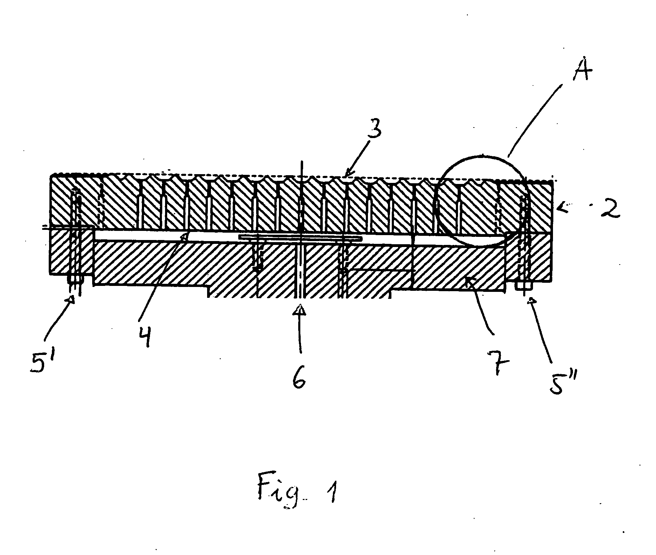

Der Träger 2 weist gemäß Fig. 1 Vertiefungen 3 auf, die jeweils eine durchgehende Öffnung 4 aufweisen. Der Träger 2 ist mit einem Basisteil 7 mittels Schrauben 5', 5" verbunden. Über die Vakuumzuleitung 6 werden die Vertiefungen 3 mit einem Unterdruck von 0,8 bar beaufschlagt.

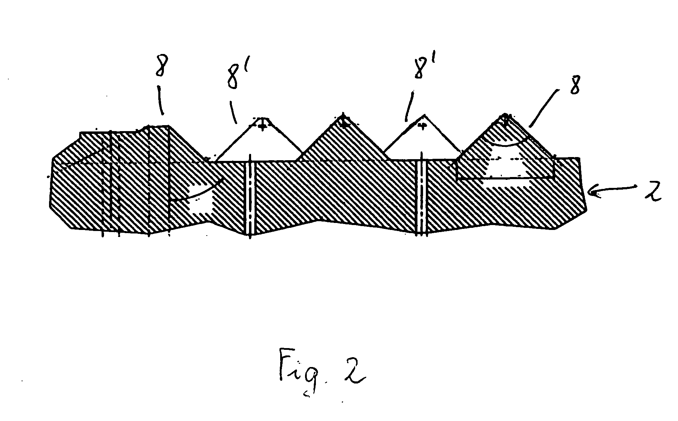

Fig. 2 zeigt den Träger 2 in einer Seitenansicht. Der Träger weist noppenartige Erhebungen 8 bzw. 8' auf. Die Figur zeigt Träger 2 und Erhebungen 8 im Schnitt, wohingegen die Erhebungen 8' hinter den Erhebungen 8 positioniert sind. Die Erhebungen sind kegelstumpfförmig mit einer Höhe von 5 mm und einem Kegelwinkel von 45°.

Eine 2 mm dicke und ebene Platte aus einem Kalk-Natron-Glas mit einer Transformationstemperatur von 630 C° wird in kaltem Zustand auf eine auf die 450 C° vorgeheizte Trägerplatte aus einem Chrom-Nickel-Stahl gelegt. Der Träger besitzt kegelstumpfförmige Noppen mit einer Höhe von 5 mm und einem Kegelwinkel von 45°. Träger und Platte werden in einem Ofen gemeinsam auf eine Endtemperatur von 740 C° gebracht und verbleiben ca. 10 Minuten im Ofen. Anschließend erfolgt ein definierter Kühlprozess um die thermischen Spannungen im Glas abzubauen.

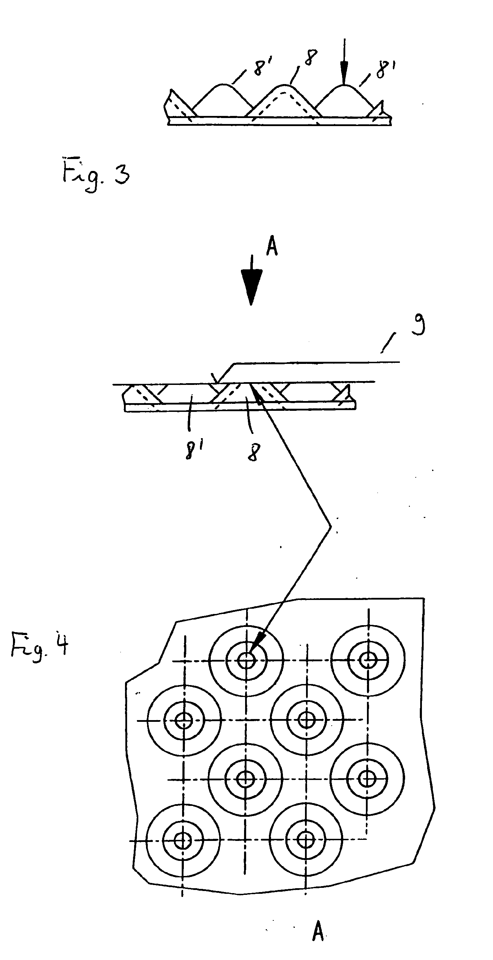

Durch das Verfahren hat das Kalk-Natron-Glas noppenartige Erhebungen erhalten. Dies zeigt Fig. 3, bei der die Platte 1 vordere und hintere Erhebungen 8 bzw. 8' aufweist. Die Noppen werden mit einem Bandschleifer 9 partiell abgeschliffen, um durchgehende Öffnungen zu schaffen. Hierzu wurden die obersten 2,1 mm mit dem Bandschleifer abgeschliffen.

Der Ausschnitt A in Fig. 1 führt zur Platte gemäß Fig. 3 oben in einer Seitenansicht bzw. Fig. 4 unten in einer Aufsicht. Die runde Randkontur der regelmäßig angeordneten kegelstumpfförmigen Noppen ist deutlich erkennbar.

Die genoppte Glasplatte dient für einen Backofen zur thermischen Entkopplung heißer und weniger heißer Raumbereiche, insbesondere vom heißen Innenbereich von der Küche als Außenbereich.

## Patentansprüche

1. Verfahren zur Herstellung einer Platte aus einem Glas oder einer Glaskeramik, **gekennzeichnet durch**
folgende Schritte:
- Auflegen der Platte (1) auf einen Träger (2) mit noppenartigen Erhebungen und/oder Vertiefungen (3).
- Gemeinsames Erwärmen der Platte und des Trägers über die Transformationstemperatur hinweg.
- Abkühlen der Platte auf Raumtemperatur.

2. Verfahren nach Anspruch 1
**dadurch gekennzeichnet,**
**dass** die Platte auf einen vorgeheizten Träger gelegt wird.

3. Verfahren nach Anspruch 1 oder 2
**dadurch gekennzeichnet,**
**dass** nach dem Erreichen der Solltemperatur eine Wartezeit bis zum Abkühlen eingehalten wird.

4. Verfahren nach einem der Ansprüche 1 bis 3
**dadurch gekennzeichnet,**
**dass** Bereiche des Trägers zwischen noppenartigen Erhebungen und/oder die noppenartigen Vertiefungen (3) mit einem Unterdruck beaufschlagt werden.

5. Verfahren nach Anspruch 4
**dadurch gekennzeichnet,**
**dass** die besagten Bereiche des Trägers durchgehende Öffnungen (4) aufweisen und auf der der Platte abgewandten Seite des Trägers ein Unterdruck angelegt wird.

6. Verfahren nach einem der Ansprüche 1 bis 5
**dadurch gekennzeichnet,**
**dass** die Platte druckbeaufschlagt wird.

7. Verfahren nach einem der Ansprüche 1 bis 6
**dadurch gekennzeichnet,**
**dass** die Noppen (8, 8') der Platte partiell abgeschliffen werden.

8. Glas- oder Glaskeramikplatte
**dadurch gekennzeichnet,**
**dass** die Platte Noppen (8, 8') aufweist.

9. Platte nach Anspruch 8 ,
**dadurch gekennzeichnet,**
**dass** die Noppen beidseitig offen ausgebildet sind.

10. Platte nach Anspruch 9,
**dadurch gekennzeichnet,**
**dass** die kleinere der beiden Noppenöffnungen einen Durchmesser von ca. 0,5 mm bis ca. 100 mm aufweist

11. Platte nach einem der Ansprüche 8 bis 10,
**dadurch gekennzeichnet,**
**dass** in einer Aufsicht auf die Platte die Noppe eine runde oder eine polygonale Randkontur aufweist.

12. Platte nach einem der Ansprüche 8 bis 11,
**dadurch gekennzeichnet,**
**dass** die Noppen kegelstumpfförmig oder polyedrisch ausgebildet sind

13. Platte nach einem der Ansprüche 8 bis 13,
**dadurch gekennzeichnet,**
**dass** die Mantelfläche der Noppe gegenüber der Noppengrundfläche um einen Winkel von ca. 20° bis ca. 85° geneigt ist.

14. Platte nach einem der Ansprüche 8 bis 13,
**dadurch gekennzeichnet,**
**dass** die Platte gewölbt ist.

15. Platte nach einem der Ansprüche 1 bis 14,
**dadurch gekennzeichnet, dass** sie eine
Oberflächenbeschichtung aufweist.

16. Flächiges Werkzeug aus Stahl,
**gekennzeichnet durch**
noppenartige Erhebungen und/oder Vertiefungen.

17. Flächiges Werkzeug nach Anspruch 15,
**dadurch gekennzeichnet,**
**dass** der Stahl CrNi-Stahl ist.

18. Flächiges Werkzeug nach Anspruch 15 oder 16,
**dadurch gekennzeichnet,**
**dass** zwischen noppenartigen Erhebungen durchgehende Öffnungen vorgesehen sind, oder dass noppenartige Vertiefungen durchgehende Öffnungen besitzen.

19. Verwendung einer Platte nach einem der Ansprüche 8 bis 15 in Wärmeerzeugern, insbesondere Backöfen, zur thermischen Entkopplung unterschiedlich warmer Raumbereiche.

20. Verwendung einer Platte nach Anspruch 15 zur Keimabtötung, insbesondere in Klimaanlagen.
